# EUROPEAN PATENT APPLICATION

(11) **EP 2 298 617 A1**
(43) Date of publication of application: **23.03.2011**
(21) Application number: 09012029.6
(22) Date of filing: 22.09.2009
(51) Int. Cl.: B62B 3/06, B62B 5/04

(54) **Brake mechanism of a hydraulic pallet truck**

(71) Applicant: Tai, Nien-Min, Yong Kang City T'ai nan (TW)
(72) Inventor: Tai, Nien-Min, Yong Kang City T'ai nan (TW)
(74) Representative: Zeitler, Giselher

(57) **Abstract**

A brake mechanism (4) of a hydraulic pallet truck (2) is assembled on two wheels (27), including a box (40) having plural supporting rods (404) respectively mounted with a spring (405). A positioning plate (406) is fitted on every two supporting rods (404) above the springs (45). A pedal (44) is set outside the box (40) through a hood (43), with a connecting rod (440) jointed with connecting ears (402) of the box (40). A horizontal rod (42) is inserted through a lengthy groove (441) into the box (40). The hood (43) is bored with a sliding groove (430) for the connecting rod (440) to pass through. Two supporting brackets (45) are installed on the box (40), respectively having a threaded rod (450) for engaging with the horizontal rod (42). Connected on each of the supporting brackets (45) is a connecting plate (46) that is jointed with a swinging arm (47,48). A brake wire (473) has one end inserted through the swinging arms (47,48) and another end connected with a hand brake lever (5). Fixed aside each of the connecting plates (46) is a brake pad (49) having an abrasive (490) at a bottom. Thus, by treading on the pedal (44) or pulling the hand brake lever (5), the hydraulic pallet truck (2) can be steadily slowed down and stopped securely.

## Description

### BACKGROUND OF THE INVENTION

### 1. Field of the Invention

This invention relates to a brake mechanism of a hydraulic pallet truck, particularly to one enabling the hydraulic pallet truck to steadily slow down and stop securely.

### 2. Description of the Prior Art

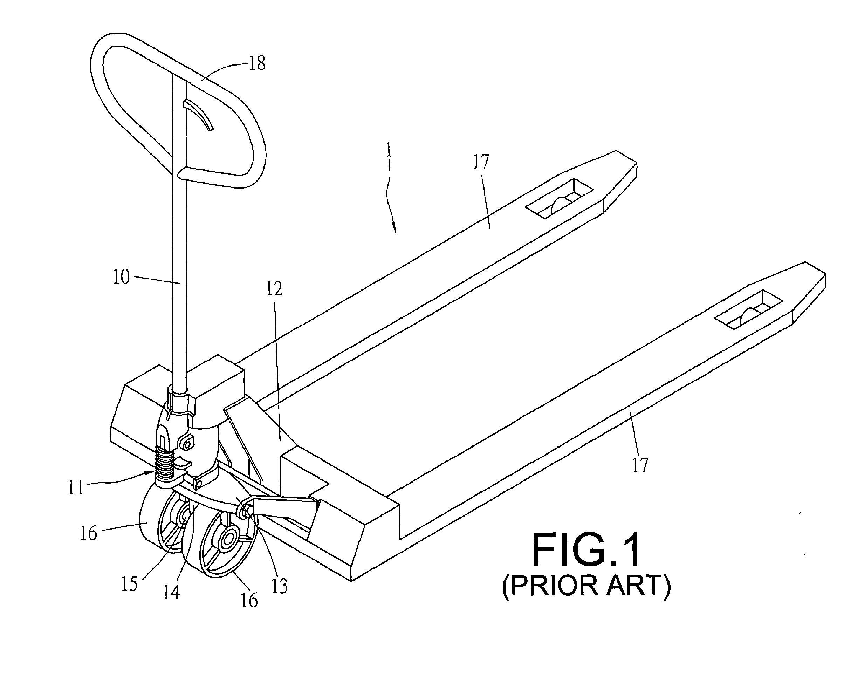

Commonly, as shown in Fig. 1, a conventional hydraulic pallet truck 1 includes a pressurizing rod 10, a hydraulic mechanism 11 installed under the pressurizing rod 10, a connecting base 12 located at one side of the hydraulic mechanism 11, a supporting base 13 fixed under the hydraulic mechanism 11, a supporting axis 14 set below the supporting base 13, and a wheel shaft 15 connected with the supporting axis 14. In addition, two ends of the wheel shaft 15 are respectively mounted with a wheel 16. A forked lifting bracket 17 is utilized to carry a pallet that is to be loaded with goods, and a grip 18 is fixed at a free end of the pressurizing rod 10. With the pressurizing rod 10 reciprocated up and down to pressurize the hydraulic mechanism 11, the forked lifting bracket 17 can be raised up so as to lift and move the pallet with goods. However, as the conventional hydraulic pallet truck 1 is usually not assembled with a brake, it counts on the strength given by an operator to stop while moving. Unfortunately, it is possible that the hydraulic pallet truck 1 may not be totally stopped should the operator is not powerful enough. Worse, if the hydraulic pallet truck 1 cannot be well controlled by the operator while running on an oblique ground, it may get out of control to accidentally hit people around or collide with something to drop off goods on the pallet. Therefore, the conventional hydraulic pallet truck 1 with no brake is somewhat dangerous during operation.

### SUMMARY OF THE INVENTION

The object of this invention is to offer a brake mechanism 4 employed to steadily slow down and securely stop a hydraulic pallet truck 2 while traveling.

Characteristically, the brake mechanism 4 is installed between two wheels 27 of the hydraulic pallet truck 2. Plural positioning bases 3 are fixed on a wheel shaft 26 and a supporting axis 26 to keep the brake mechanism 4 positioned, respectively provided with plural through holes 30 corresponding to an identical number of nuts 31. The brake mechanism 4 is provided with a box 40 having plural threaded bolts 400 located on a rear side for being inserted through the through holes 30 of the positioning bases 3 to engage with the nuts 31, two vertical strips 401 and two pivotal connecting ears 402 correspondingly located on an interior wall, four vertical supporting rods 404 vertically planted inside, a spring 405 mounted around each of the supporting rods 404, two positioning plates 406 employed to respectively connect two of the supporting rods 404 and resting on the spring 405, two through holes 407 bored near two ends of each of the positioning plates 406 for the supporting rods 404 to pass through, a through hole 408 bored in each of the positioning plates 406 between the through holes 407, and two holes 409 bored in a top. A horizontal rod 42 is installed inside the box 40, provided with two inner through holes 420, a fastening element 422 employed to penetrate each of the inner through holes 420 and the through hole 408 of each of the positioning plates 406 to keep the horizontal rod 42 positioned on the positioning plates 406. Two fixing plates 41 are fixed inside the box 40, respectively provided with a lengthy hole 410 for being inserted by the horizontal rod 42. A hood 43 is laid on a front vertical side of the box 40, provided with a sliding groove 430 and a locking groove 431 formed at one end of the sliding groove 430. A pedal 44 is installed outside the hood 43, including a connecting rod 440 extended outward from a bottom to pass through the sliding groove 430 of the hood 43, a pivotal joint 442 extended upward from one end of the connecting rod 440, a pivotal bolt and nut 444 inserted through the pivotal connecting ears 402 and the pivotal joint 442, a spring 445 mounted around the pivotal bolt and nut 444 and confined between one of the pivotal connecting ears 402 and the pivotal joint 442 of the connecting rod 440, a lengthy groove 441 bored in the connecting rod 440 for being inserted by the horizontal rod 42. Two supporting brackets 45 are correspondingly installed above the box 40, respectively provided with a threaded rod 450 extended down to insert through said holes 409 of the box 40 to fix with said horizontal rod 42, an U-shaped groove 451 defined in a top portion, an axial hole 452 bored through each sidewall defining the U-shaped groove 451. Two connecting plates 46 are respectively fitted in the U-shaped grooves 451 of the supporting brackets 45, provided with a straight sliding groove 460, an arc-like sliding groove 461, an upper axial hole 462 and a lower axial hole 463 bored through two sidewalls. Two pivotal shafts 453 are respectively inserted through the axial holes 452 of the supporting brackets 45 and the upper axial holes 462 of the connecting plates 46. Two swinging arms 47 and 48 are respectively installed beside the connecting plates 46, provided with a concave groove 470(480) and two axial holes 471(481) bored correspondingly in two side arms to communicate with the concave groove 470(480). Two pivotal shafts 475 and 487 are respectively inserted through the axial holes 471 and 481 and the lower axial holes 463 of the connecting plates 46. Two wire holes 472 and 483 are respectively bored in the swinging arms 47 and 48. One end of a brake wire 473 is orderly inserted through the wire hole 472 of the swinging arm 47, a spring 474 and the wire hole 483 of the swinging arm 48, and finally fastened with the swinging arm 48 to keep the spring 474 confined between the swinging arms 47 and 48. Two brake pads 49 are respectively installed outside the connecting plates 46, provided with an abrasive 490 located at a bottom so as to contact with the wheels 27, two threaded positioning bars 491 extended inward from a sidewall to respectively pass through the straight sliding groove 460 and the arc-like sliding groove 461 of the connecting plates 46 to engage with a nut 492 so that the brake pads 49 can be fixed beside the connecting plates 46. A hand brake lever 5 is assembled with a grip 21 and connected with one end of the brake wire 473.

### BRIEF DESCRIPTION OF DRAWINGS

This invention is better understood by referring to the accompanying drawings, wherein:
Fig. 1 is a perspective view of a conventional hydraulic pallet truck;
Fig. 2 is a perspective view of a hydraulic pallet truck installed with a preferred embodiment of a brake mechanism in the present invention;
Fig. 3 is a first partial exploded view of the preferred embodiment of a brake mechanism of a hydraulic pallet truck in the present invention;
Fig. 4 is a second partial exploded view of the preferred embodiment of a brake mechanism of a hydraulic pallet truck in the present invention;
Fig. 5 is a third partial exploded view of the preferred embodiment of a brake mechanism of a hydraulic pallet truck in the present invention;

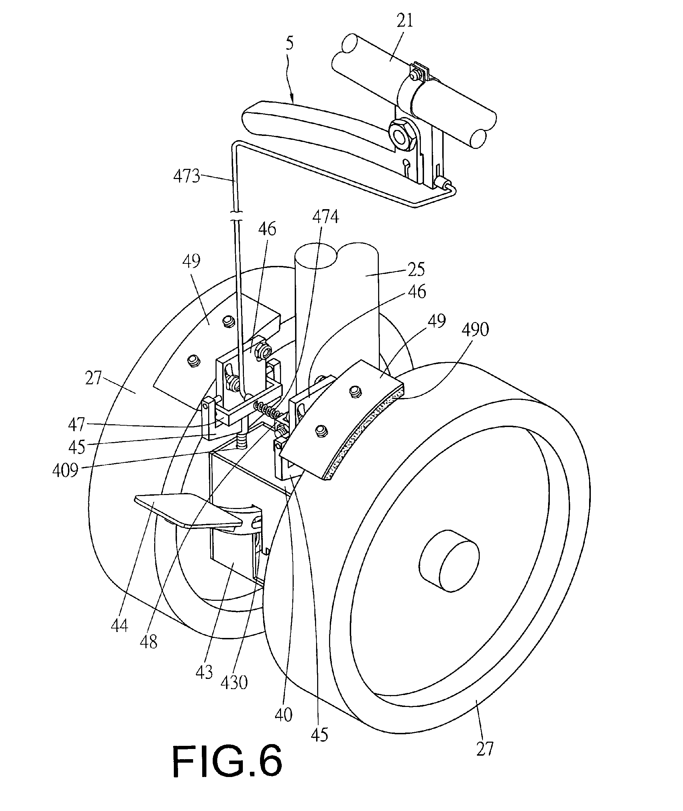

Fig. 6 is a perspective view of the preferred embodiment of a brake mechanism of a hydraulic pallet truck in the present invention;

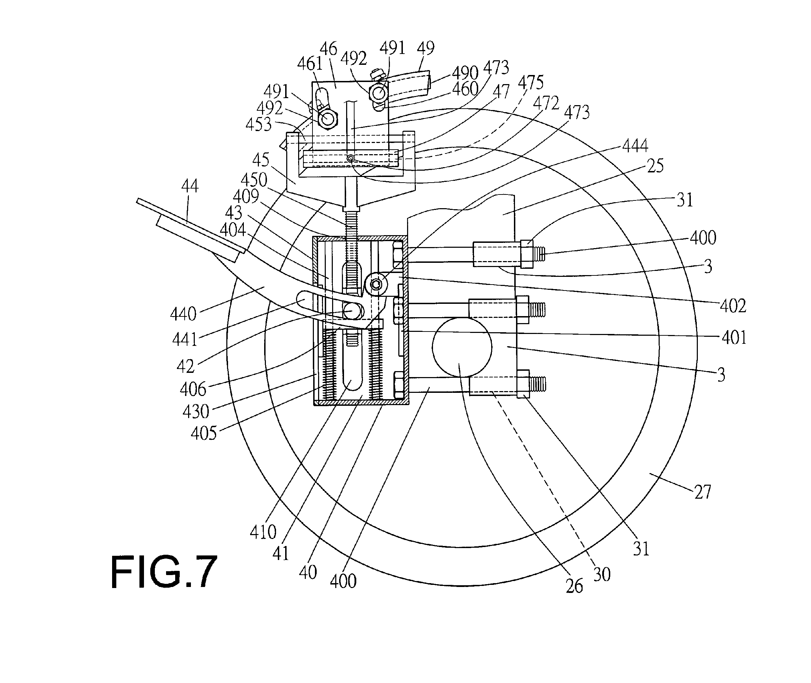

Fig. 7 is a side cross-sectional view of the preferred embodiment of a brake mechanism of a hydraulic pallet truck in the present invention;

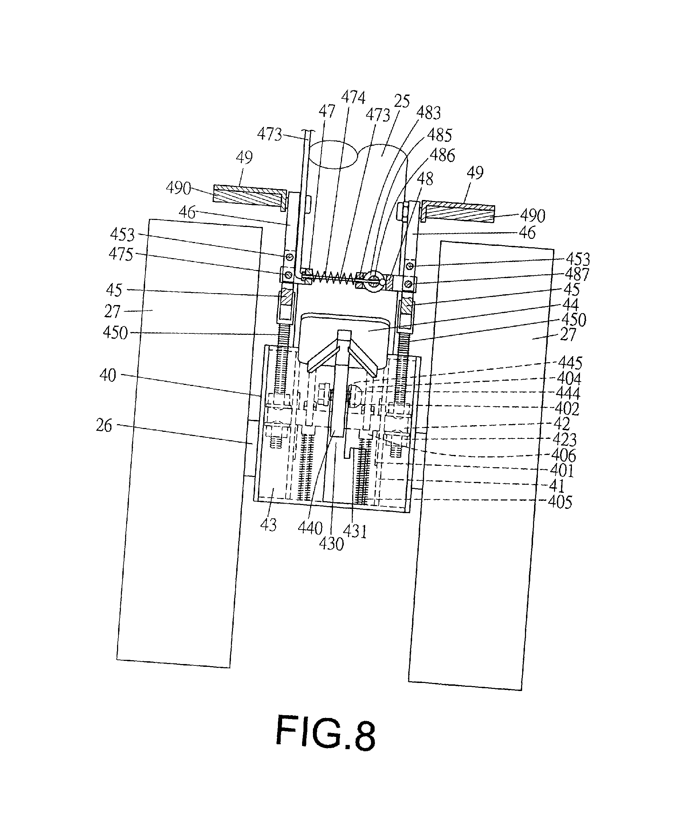

Fig. 8 is a front cross-sectional view of the preferred embodiment of a brake mechanism of a hydraulic pallet truck in the present invention;
Fig. 9 is a perspective view of the preferred embodiment of a brake mechanism of a hydraulic pallet truck in the present invention, showing a pedal being treaded on;

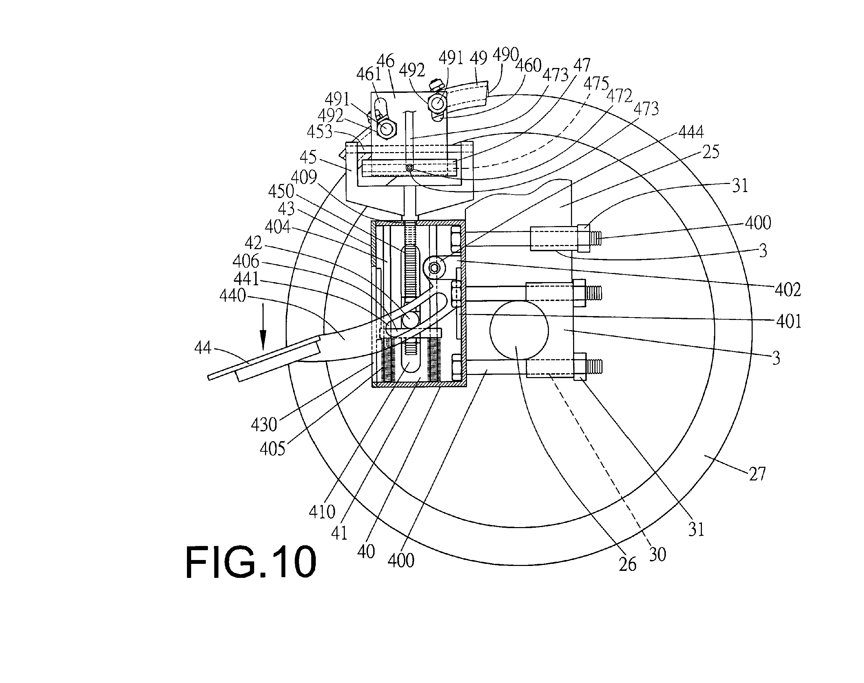

Fig. 10 is a side cross-sectional view of the preferred embodiment of a brake mechanism of a hydraulic pallet truck in the present invention, showing the pedal being treaded on;

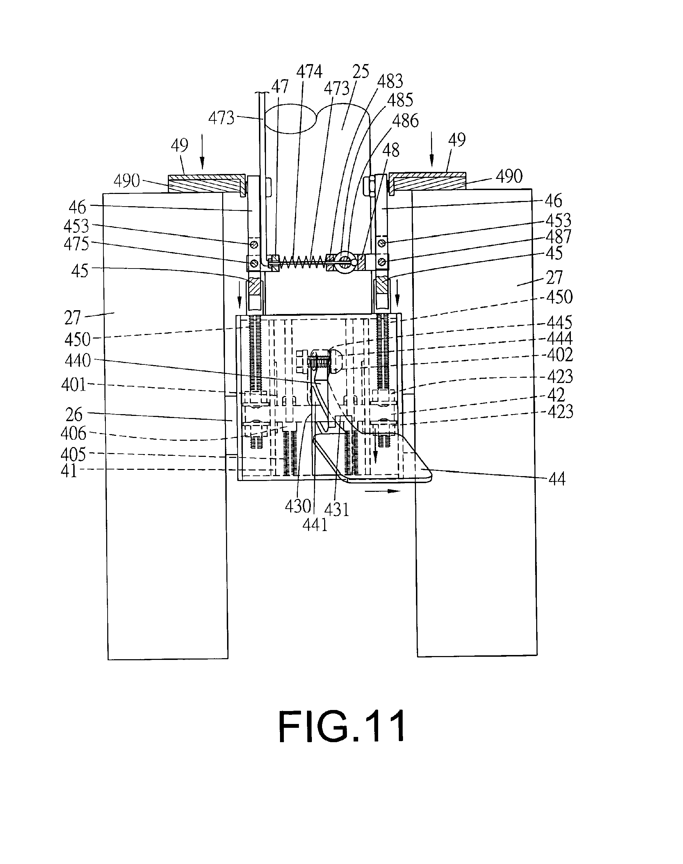

Fig. 11 is a front cross-sectional view of the preferred embodiment of a brake mechanism of a hydraulic pallet truck in the present invention, showing the pedal being treaded on;
Fig. 12 is a perspective view of the preferred embodiment of a brake mechanism of a hydraulic pallet truck in the present invention, showing a hand brake lever being pulled; and

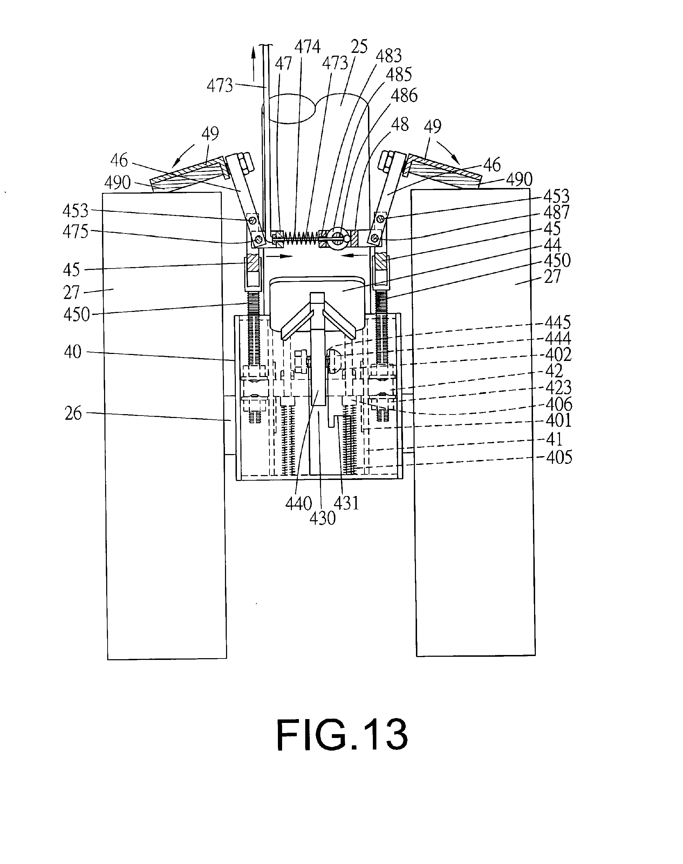

Fig. 13 is a front cross-sectional view of the preferred embodiment of a brake mechanism of a hydraulic pallet truck in the present invention, showing the hand brake lever being pulled.

### DETAILED DESCRIPTION OF THE PREFERRED EMBODIMENT

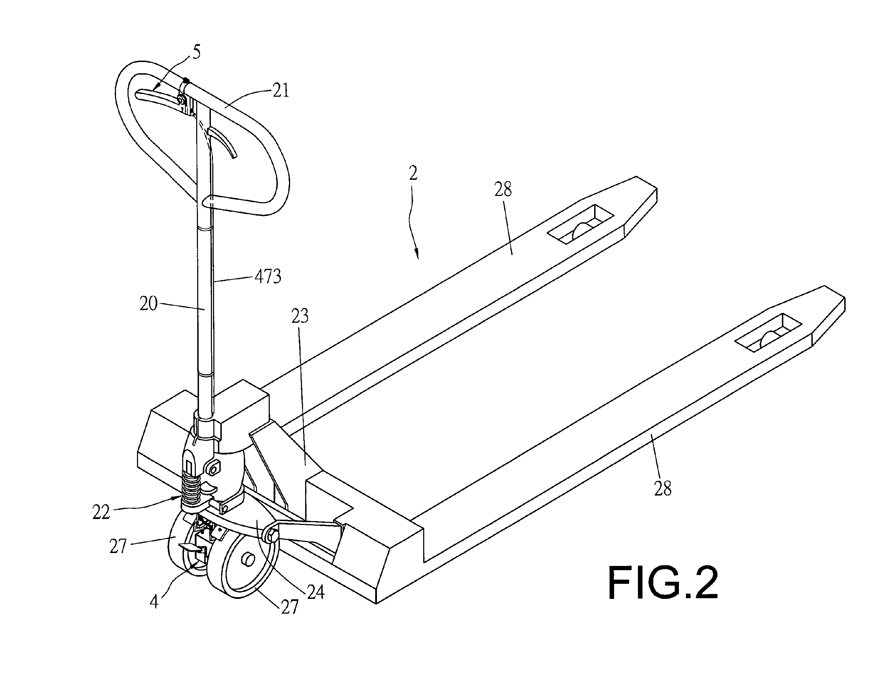

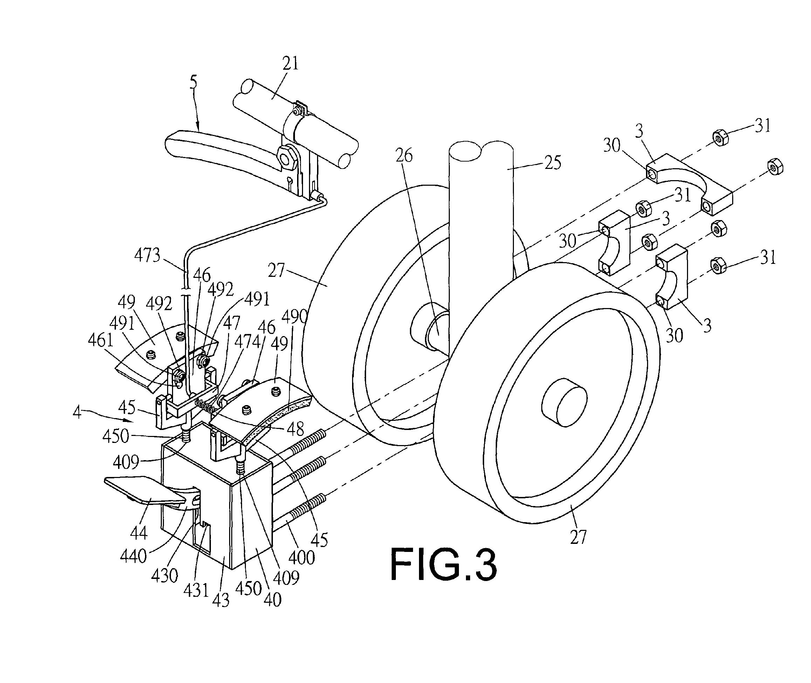

Figs. 2 ∼ 8 show a preferred embodiment of a brake mechanism 4 of a hydraulic pallet truck in the present invention. As shown in Fig. 2, the hydraulic pallet truck 2 includes a pressurizing rod 20, a grip 21 fixed at a top of the pressurizing rod 20, a hydraulic mechanism 22 installed under the pressurizing rod 20, a connecting base 23 located at one side of the hydraulic mechanism 22, and a supporting base 24 fixed under the hydraulic mechanism 22. And, as shown in Fig. 3, the hydraulic pallet truck 2 is also provided with a supporting axis 25 set below the supporting base 24. Again, as shown in Fig. 2, the hydraulic pallet truck 2 additionally includes a wheel shaft 26 connected with the supporting axis 25, a wheel 27 installed at two ends of the wheel shaft 26 respectively, a forked lifting bracket 28 located at one side of the connecting base 23 for carrying a pallet used to be loaded with goods, plural positioning bases 3, the brake mechanism 4 and a hand brake lever 5. The positioning bases 3 are fixed with the wheel shaft 26 and the supporting axis 25 between the wheels 27, respectively provided with plural through holes 30 and plural nuts 31 corresponding to the through holes 30.

The brake mechanism 4 is installed between the wheels 27, provided with a box 40, two fixing plate 41, a horizontal rod 42, a hood 43, a pedal 44, two supporting brackets 45, two connecting plates 46, two swinging arms 47 and 48, and two brake pads 49.

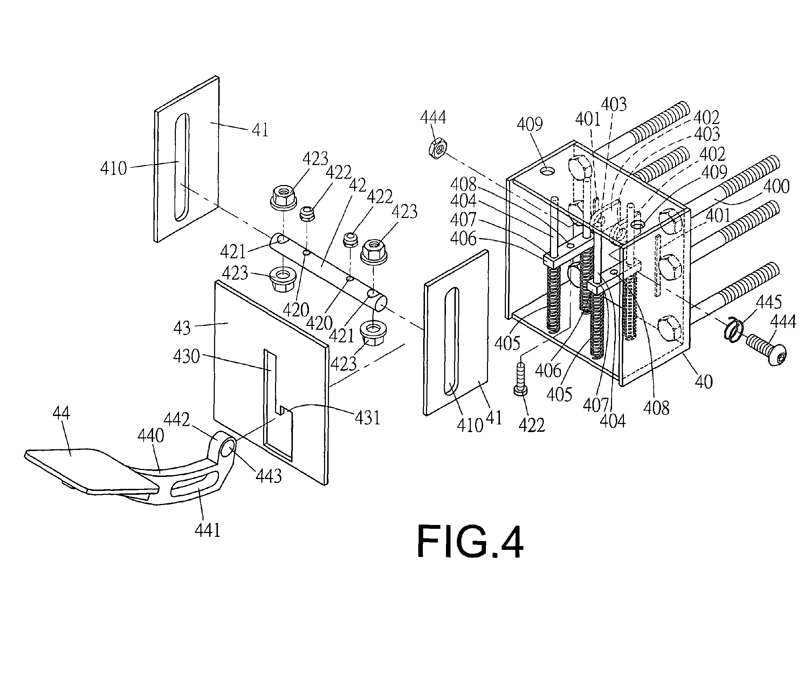

The box 40 is provided with plural threaded bolts 400 for passing through the through holes 30 of the positioning bases 3 to engage with the nuts 31, two vertical strips 401 correspondingly located on an interior wall of a vertical side as shown in Fig. 4, two pivotal connecting ears 402 located between the vertical strips 401 and properly spaced apart, a through hole 403 bored in each of the pivotal connecting ears 402, four vertical supporting rods 404 planted inside, and a spring 405 mounted around each of the supporting rods 404. Further, Two positioning plates 406 are employed to respectively connect two of the supporting rods 404, with two through holes 407 bored near two ends of each of the positioning plates 406 for the supporting rods 404 to pass through. Properly bored between the through holes 407 of each of the positioning plate 406 is a through hole 408. In addition, a top side of the box 40 is bored with two holes 409 oppositely.

Each of the fixing plates 41 is fixed inside the box 40 to contact with one side of the vertical strips 401 respectively, provided with a lengthy hole 410 for the horizontal rod42 to move therein.

The horizontal rod 42 is provided with two inner through holes 420 bored at two preset corresponding locations on an upper side, two outer through holes 421 respectively bored near two ends outside the inner through holes 420, a fastening element 422 employed to penetrate each of the inner through holes 420 and the through hole 408 of each of the positioning plates 406 to keep the horizontal rod 42 positioned on the positioning plates 406, and two pairs of nuts 423 respectively located thereon and thereunder to correspond to the outer through holes 421.

The hood 43 is laid on a front side of the box 40, provided with an L-shaped sliding groove 430, and a locking groove 431 extended upward from a right portion of the sliding groove 430.

The pedal 44 is installed outside the hood 43, provided with a connecting rod 440 extended outward from the bottom to pass through the sliding groove 430 of the hood 43, a lengthy groove 441 bored in the connecting rod 440 for being inserted by the horizontal rod 42, a pivotal joint 442 extended upward from one end of the connecting rod 440 and having a through hole 443 bored in the pivotal joint 442. In addition, a pivotal bolt and nut 444 is employed to pass through the through holes 403 of the pivotal connecting ears 402 and the through hole 443, mounted with a spring 445 located between one of the connecting ears 402 and the pivotal joint 442.

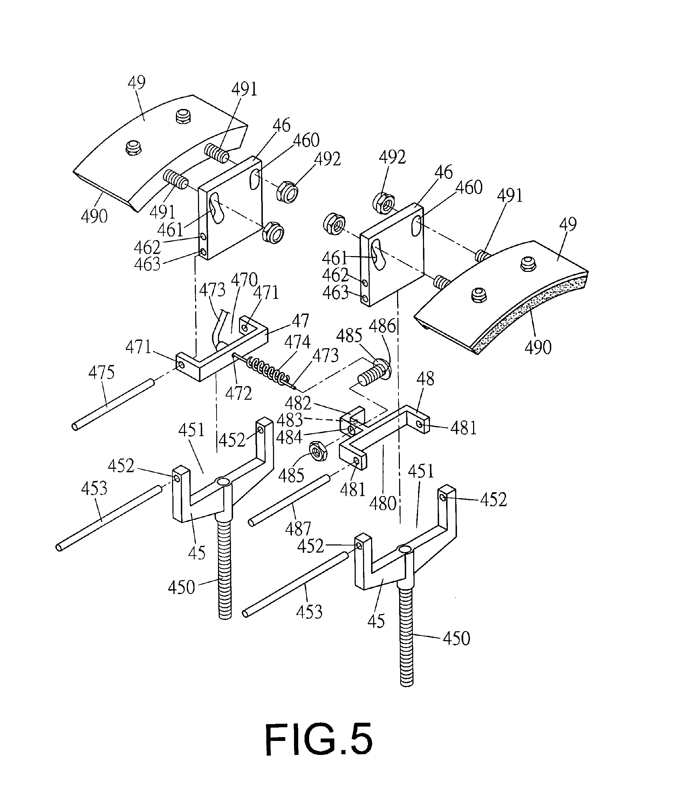

Two supporting brackets 45 shown in Fig. 3 are installed above the box 40, respectively provided with a threaded rod 450 extended down, as shown in Fig. 5, through the holes 409 of the box 40, an U-shaped groove 451 defined in a top portion, an axial hole 452 bored through each sidewall defining the U-shaped groove 451, and two pivotal shafts 453 extending through the two axial holes 452.

Two connecting plates 46 are respectively fitted in the U-shaped groove 451 of the supporting brackets 45, provided with a straight sliding groove 460, an arc-like sliding groove 461, an upper axial hole 462 and a lower axial hole 463 bored through two sidewalls. The pivotal shafts 453 are used to pass through the axial holes 452 of the supporting brackets 45 and the upper axial holes 462.

Two swinging arms 47 and 48 are respectively provided with a concave groove 470(480), and two axial holes 471(481) bored correspondingly in two side arms to communicate with the concave groove 470(480). The swinging arm 47 is additionally provided with a wire hole 472 for a brake wire 473 to pass through, and a spring 474 mounted around one end of the brake wire 473. The swinging arm 48 is additionally provided with a connecting piece 482 shaped as a reverse L, a wire hole 483 bored in the top side of the connecting block 482 for the brake wire 473 to pass through, a through hole 484 bored in another side of the connecting piece 482 for a screw 485 to pass through, and a wire hole 486 transversely bored through the screw 485 for the brake wire 473 to pass through and get fixed thereof. Furthermore, two pivotal shafts 475 and 487 are inserted through the axial holes 471 and 481 and the lower axial holes 463 of the connecting plates 46 respectively.

Two brake pads 49 are respectively installed outside the connecting plates 46, provided with an abrasive 490 located at the bottom, two threaded positioning bars 491 extended inward from a sidewall of each of said brake pads 49, and two nuts 492 to be engaged with the threaded positioning bars 491.

Moreover, a hand brake lever 5 is assembled with the grip 21 and connected with one end of the brake wire 473.

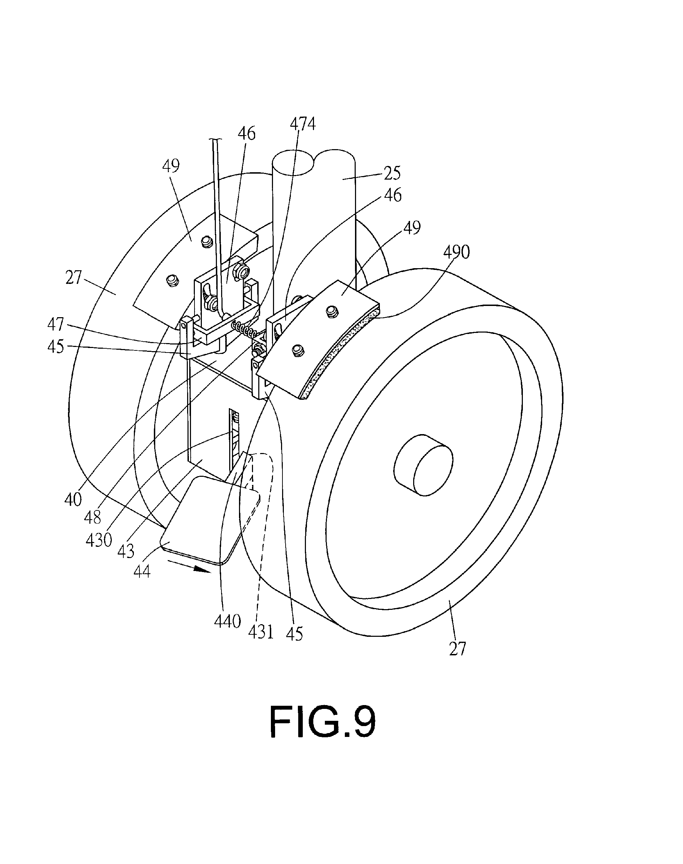

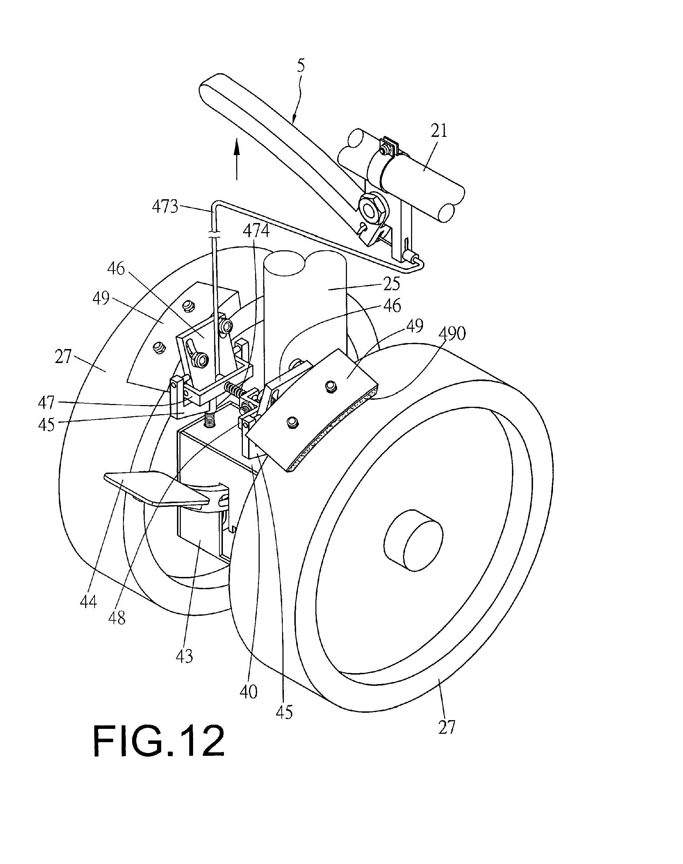

In using, as shown in Figs. 9 ∼ 11, the hydraulic pallet truck 2 can be stopped by treading on the pedal 44 of the brake mechanism 4 while running. As soon as the pedal is pressed down, the connecting rod 440 of the pedal 44 is to swing down round the pivotal bolt and nut 444, and the horizontal rod 42 is as well forced to descend, enabling the positioning plates 406 to move downward along the supporting rods 404. By the time, the spring 445 is elastically contracted. The supporting brackets 45 and the connecting plates 46 are also moved down as the horizontal rod 42 is declining. So are the brake pads 49 compelled to move down to enable the abrasives 490 to contact with the wheels 27. The wheels 27 are then to be stopped running. Therefore, the hydraulic pallet truck 2 is quickly stopped still. If the hydraulic pallet truck 2 is continued to be parked, an operator just needs to push the pedal 44 to move aside after treading on it, so that the connecting rod 440 is positioned in the locking groove 431 of the hood 43 to keep the spring 445 continuously contracted, forcing the abrasives 490 to tightly contact with the wheels 27 to keep them from running. When the hydraulic pallet truck 2 is to be released from being braked, it only needs to tread on the pedal 44 and push it into the sliding groove 430. By means of elasticity of the spring 445, the horizontal rod 42, the pedal 44 and the supporting brackets 45 are to be moved upward to their original positions. The connecting plates 46 and the brake pads 49 are simultaneously driven by supporting brackets 45 to move up, keeping the abrasives 490 from contacting with the wheels 27. In addition, as shown in Figs. 12 ∼ 13, an operator can utilize the hand brake lever 5 by hand to tightly pull the brake wire 473 for stopping the hydraulic pallet truck 2. As the brake wire 473 is pulled up, the swinging arms 47 and 48 will move close to each other to compress the spring 474. Being driven by the swinging arms 47 and 48, with the pivotal shafts 453 of the supporting brackets 45 functioning as axis, the bottoms of the connecting plates 46 are to swing up inwardly and the tops of the connecting plates 46 are to swing down outwardly. By the time, the brake pads 49 are to be moved down outwardly so as to enable the abrasives 490 to rest on the wheels 27 to create friction to slow down the hydraulic pallet truck 2. Assembled with either the pedal 44 operated by a foot or the hand brake lever 5 pulled by hand, the hydraulic pallet truck 2 can therefore travel securely.

It is to be noticed that the interval between the abrasives 490 and the wheels 27 is adjustable. That is, twisting the threaded rods 450 of the supporting brackets 45 along the nuts 423 located above and under the horizontal rod 42 can enhance or lessen the length of the threaded rods 450 extending above the box 40, so enabling the interval between the abrasives 490 and the wheels 27 lengthened or shortened as well. And, by means of the straight groove 460 and the arc-like groove 461 of the connecting plates 46, the angle of the brake pads 49 can adjusted to maximally contact with the wheels 270 to achieve a maximum braking effect.

While the preferred embodiment of the invention has been described above, it will be recognized and understood that various modifications may be made therein and the appended claims are intended to cover all such modifications that may fall within the spirit and scope of the invention.

## Claims

1. A brake mechanism 4 of a hydraulic pallet truck 2, said hydraulic pallet truck 2 comprising a pressurizing rod 20, a grip 21 fixed at top of said pressurizing rod 20, a hydraulic mechanism 22 installed under said pressurizing rod 20, a connecting base 23 located at one side of said hydraulic mechanism 22, a supporting base 24 fixed under said hydraulic mechanism 22, a supporting axis 25 set below said supporting base 24, a wheel shaft 26 connected with said supporting axis 25, two wheels 27 respectively installed at one end of said wheel shaft 26, a forked lifting bracket 28 located at one side of said connecting base 23 for carrying a pallet to be loaded with goods, and
**characterized by** said hydraulic pallet truck 2 installed with said brake mechanism 4 between said wheels 27, plural positioning bases 3 fixed on said wheel shaft 26 and said supporting axis 25 to keep said brake mechanism 4 positioned and respectively provided with plural through holes 30 corresponding to an identical number of nuts 31, said brake mechanism 4 provided with a box 40 having plural threaded bolts 400 located on a rear side for passing through said through holes 30 of said positioning bases 3 to engage with said nuts 31, two vertical strips 401 and two pivotal connecting ears 402 correspondingly located on an interior wall of said box 40, four vertical supporting rods 404 planted inside said box 40, a spring 405 mounted around each of said supporting rods 404, two positioning plates 406 employed to respectively connect said two supporting rods 404 and resting on said spring 405, two through holes 407 bored near two ends of each said positioning plate 406 for said supporting rods 404 to pass through, a through hole 408 bored in each of said positioning plates 406 between said through holes 407, two holes 409 bored in a top side of said box 40, a horizontal rod 42 installed inside said box 40 and provided with two inner through holes 420, a fixing element 422 employed to penetrate each of said inner through holes 420 and said through hole 408 of each of said positioning plates 406 to keep said horizontal rod 42 positioned on said positioning plates 406, two fixing plates 41 fixed inside said box 40 and respectively provided with a lengthy hole 410 for being inserted by said horizontal rod 42, a hood 43 laid on a front side of said box 40 and provided with a sliding groove 430, a locking groove 431 extended upward from a right portion of said sliding groove 430, a pedal 44 installed outside said hood 43 and provided with a connecting rod 440 extended outward from a bottom to pass through said sliding groove 430 of said hood 43, a pivotal joint 442 extended upward from one end of said connecting rod 440, a pivotal fixing element 444 inserted through said pivotal connecting ears 402 and said pivotal joint 442, a spring 445 mounted around said pivotal bolt and nut 444 and confined between one of said pivotal connecting ears 402 and said pivotal joint 442 of said connecting rod 440, a lengthy groove 441 bored in said connecting rod 440 for being inserted by said horizontal rod 42, two supporting brackets 45 correspondingly installed above said box 40 and respectively provided with a threaded rod 450 formed to extend down to insert through said holes 409 of said box 40 to fix with said horizontal rod 42, an U-shaped groove 451 defined in a top portion of each said supporting bracket 45, an axial hole 452 bored through each sidewall defining said U-shaped groove 451 of said supporting brackets 45, two connecting plates 46 respectively fitted in said U-shaped groove 451 of said supporting brackets 45 and provided with a straight sliding groove 460 and an arc-like sliding groove 461, an upper axial hole 462 and a lower axial hole 463 bored through two sidewalls of each of said connecting plates 46, two pivotal shafts 453 respectively inserted through said axial holes 452 of said supporting brackets 45 and said upper axial holes 462 of said connecting plates 46, two swinging arms 47 and 48 respectively installed beside said connecting plates 46 and provided with a concave groove 470(480), two axial holes 471 (481) bored correspondingly in two side arms of each of said swinging arms 47 and 48 to communicate with said concave groove 470(480), two pivotal shafts 475 and 487 respectively inserted through both said axial holes 471 and 481 and said lower axial holes 463 of said connecting plates 46, two wire holes 472 and 483 respectively bored in said swinging arms 47 and 48, one end of a brake wire 473 orderly inserted through said wire hole 472 of said swinging arm 47, a spring 474 fitted around said brake wire 473 and confined between said swinging arms 47 and 48, and end of said brake wire 473 passing through a wire hole 483 of another said swinging arm 48 and fixed on said another swinging arm 48, two brake pads 49 respectively installed outside said connecting plates 46 and provided with an abrasive 490 located at a bottom so as to contact with said wheels 27, two threaded positioning bars 491 extended inward from a sidewall of each said brake pads 49 to respectively pass through both said straight sliding groove 460 and said arc-like sliding groove 461 of said connecting plates 46 to engage with a nut 492 so that said brake pads 49 can be fixed beside said connecting plates 46, a hand brake lever 5 assembled with said grip 21 and connected with one end of said brake wire 473.

2. The brake mechanism 4 of a hydraulic pallet truck 2 as claimed in Claim 1, wherein said horizontal rod 42 is provided with two outer through holes 421 correspondingly bored near two ends and two pairs of nuts 423 respectively located thereon and thereunder to correspond to said outer through holes 421, said threaded rods 450 of said supporting brackets 45 inserted through said outer through holes 421 and engaged with said nuts 423 located above and under said horizontal rod 42.

3. The brake mechanism 4 of a hydraulic pallet truck 2 as claimed in Claim 1, wherein said swinging arm 48 is provided with a connecting block 482, a wire hole 483 bored in a top side of said connecting block 482 for said brake wire 473 to pass through, a through hole 484 bored in another side of said connecting piece 482 for a screw 485 to pass through, a wire hole 486 transversely bored through said screw 485 for said brake wire 473 to pass through and get fixed thereof.
